# EUROPÄISCHE PATENTSCHRIFT

(11) **EP 0 901 313 B1**
(45) Veröffentlichungstag und Bekanntmachung des Hinweises auf die Patenterteilung: **29.09.2004**
(21) Anmeldenummer: 98113763.1
(22) Anmeldetag: 23.07.1998
(51) Int. Cl.: H05B 37/02

(54) **Dimmersystem**
Dimmersystem
Système gradateur

(30) Priorität: 05.09.1997 DE 19738857
(43) Veröffentlichungstag der Anmeldung: 10.03.1999
(73) Patentinhaber: ABB PATENT GmbH, 68526 Ladenburg (DE)
(72) Erfinder: Clever, Gerhard, Dipl.-Ing., 58553 Halver (DE); Ulbrich, Stefan, Dipl.-Ing., 58579 Schalksmühle (DE)
(74) Vertreter: Miller, Toivo

(56) Entgegenhaltungen:
- WO-A-92/15052
- DE-A- 3 538 584

## Beschreibung

Die Erfindung bezieht sich auf ein Dimmersystem zur Steuerung von Beleuchtungseinrichtungen.

Dimmer zur Helligkeitssteuerung sind allgemein bekannt. Sie weisen einen Leistungsteil mit einem steuerbaren Leistungshalbleiterbaustein auf, der über eine Steuereinrichtung, einem vorgegebenen Sollwert entsprechend, angesteuert wird. Dabei sind sowohl Phasenanschnitt- als auch Phasenabschnittsteuerungen möglich.

Die Ausgangsleistung muß an eine vorgesehene maximale Last angepaßt sein; eine Erweiterungsmöglichkeit besteht nicht.

Die Veröffentlichung WO 92/15052 beschreibt eine mittels Phasenanschnittsteuerung arbeitende Leistungsregelung insbesondere zum Dimmen in Beleuchtungsvorrichtungen. Die Regelschaltung schaltet bei Erkennen einer induktiven Last auf Phasenabschnittsteuerung um.
Die Offenlegungsschrift DE 3538584 A1 beschreibt eine Anordnung aus mehreren parallelgeschalteten Feldeffekttransistoren für Leistungsanwendungen.

Der Erfindung liegt die Aufgabe zugrunde, ein Dimmersystem anzugeben, das in Leistungsschritten an eine gewünschte Ausgangsleistung anpaßbar ist.

Diese Aufgabe wird durch ein Dimmersystem mit den im Anspruch 1 angegebenen Merkmalen gelöst. Vorteilhafte Ausgestaltungen sind in weiteren Ansprüchen angegeben.

Das vorgeschlagene modulare Dimmersystem hat unter anderem den Vorteil, daß Bedingungen zur Erlangung von Prüfzeichen, wie z. B. VDE- oder KEMA-Zeichen ohne weiteres entsprochen werden kann. Den damit verbundenen Vorschriften bezüglich des zulässigen Stromoberwellengehalts kann nämlich ansonsten nur mit hohem Steuerungsaufwand entsprochen werden. Das modulare Dimmersystem kann so ausgelegt werden, daß die Gesamtleistung in der Grundausstattung mit einem Mastermodul und nur einem Slave-Modul unterhalb von 1 KVA bleibt. Bei solchen, für Anwendungen im Wohn- und Geschäftsbereich geeigneten Dimmern wird der Stromoberwellengehalt bei der Prüfzeichenvergabe nicht gemessen. Ein System mit mehr als zwei Slave-Dimmern gilt als ein System für industrielle Anwendungen und ist daher ebenfalls von einer Messung des Stromoberwellengehalts befreit. Das modulare Dimmersystem ermöglicht daher eine Zulassung, Produktion und Lagerhaltung eines einheitlichen Systems für unterschiedliche Anwendungen.

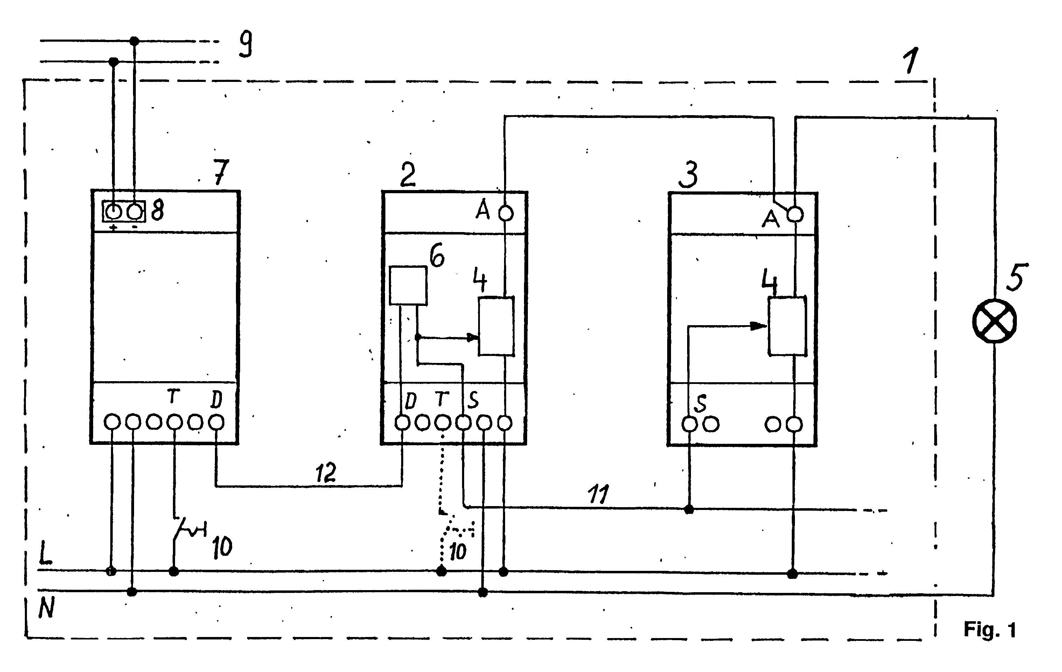

In Fig. 1 ist ein Ausführungsbeispiel eines modularen Dimmersystems 1 in einer Grundausstattung dargestellt, mit einem Master-Dimmer 2 und einem Slave-Dimmer 3. Diese Dimmermodule 2, 3 enthalten jeweils einen Leistungsteil 4. Zur Leistungsanpassung sind weitere Slave-Dimmer anschließbar, wobei in einfacher Weise alle Anschlüsse A, L, S der Slave-Dimmer parallel geschaltet werden. Der Leistungsteil 4 des Master-Dimmers 2 und die Leistungsteile 4 aller Slave-Dimmer 3 sind elektrisch parallel geschaltet und an diese Parallelschaltung ist eine Last 5 anschließbar.

Die Leistungsteile 4 enthalten wenigstens einen Leistungstransistor. Bei einer Verwendung von Power-MOS-Transistoren ergibt sich eine praktisch gleiche Lastaufteilung auf die elektrisch parallel geschalteten Leistungsteile 4 durch die Durchlaßwiderstände der Leistungstransistoren. Dabei führt der Transistor mit dem geringsten Widerstand den höchsten Strom. Durch den Stromfluß erwärmt sich der Transistor, so daß sein Widerstand ansteigt. Damit wird automatisch ein Teil des Stromes auf andere Transistoren verlagert und eine Symmetrierung auf ein thermisches Gleichgewicht erreicht.

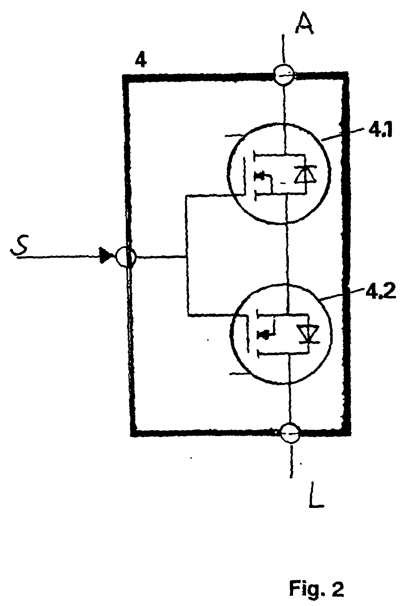

Fig. 2 zeigt eine Ausführung des Leistungsteils mit zwei Leistungstransistoren 4.1, 4.2. Mit Triacs läßt sich dagegen nicht auf solch einfache Weise eine annähernd gleiche Laststromverteilung auf mehrere Module erreichen, so daß Leistungsteile mit Triacs erheblich überdimensioniert werden müßten.

Der Master-Dimmer 2 enthält eine Steuereinrichtung 6 mit einem Mikroprozessor und arbeitet nach einem Universaldimmerprinzip. Das bedeutet, daß die Steuereinrichtung 6 selbsttätig einen Lasttest durchführt, mit dem sie die Art der angeschlossenen Last 5 ermittelt. Wird beim Lasttest anhand von Überspannungen oder Überströmen eine induktive Last erkannt, also ein konventioneller Transformator, dann wird Phasenanschnitt eingestellt. Wird nach einer bestimmten Anzahl von Prüfzyklen keine induktive Last erkannt, wird Phasenabschnitt eingestellt zur Speisung von elektronischen Trafos oder Glühlampen.

Der Master-Dimmer 2, bzw. seine Steuereinrichtung 6 legt den Schaltzustand, den Helligkeitswert und den Phasenwinkel fest und bildet auf dieser Grundlage entsprechende Ansteuersignale für alle Leistungsteile 4. Diese Festlegung erfolgt auf Grund eines über einen Dateneingang D oder einen Tasteneingang T des Master-Dimmers 2 eingebbaren Helligkeitssollwerts und durch eine Synchronisation mit dem Nulldurchgang der Netzwechselspannung, die über Netzanschlüsse N, L zugeführt ist.

Die in der Steuereinrichtung 6 des Master-Dimmers 2 gebildeten Ansteuersignale sind dem Leistungsteil 4 des Master-Dimmers 2 zugeführt und außerdem über einen Steuerausgang S und Steuerleitungen 11 (Signalleitung und Masseleitung) zu allen angeschlossenen Slave-Dimmern 3 geführt. Die Slave-Dimmer benötigen daher keine Steuereinrichtung.

Das modulare Dimmersystem 1 ist ergänzbar durch ein Steuermodul 7, das Anschlußklemmen 8 zur Ankopplung an Busleitungen 9 eines Installationsbussystems, z. B. des EIB-Systems aufweist. Das Steuermodul 7 kann auch dafür eingerichtet sein, Signale eines sogenannten Netzbussystems, z. B. des Powernet-Systems, die der Netzspannung überlagert sind, aus der Netzspannung auszukoppeln. Außerdem kann das Steuermodul 7 einen Eingang T für Eingaben mittels eines Tasters 10 aufweisen. Vom Steuermodul 7 auf Grund solcher Eingaben über ein Bussystem oder vor Ort erkannter Schaltzustände und Helligkeitswerte werden in ein Datensignal, z. B. in ein pulsweitenmoduliertes Signal umgesetzt und über eine Datenleitung 12 zum Master-Dimmer 2 übertragen.

Die Steuereinrichtung 6 mit Mikroprozessor des Master-Dimmers 2 ermöglicht eine Reihe von Grund- oder Zusatzfunktionen. Solche Funktionen können z. B. sein: Einstellung einer Grundhelligkeit, automatisches Einstellen des Dimmers nach dem Einschalten auf einen vor dem letzten Ausschalten gespeicherten Memorywert, Beendigung eines Dimmvorgangs in Richtung hell durch einen Maximalstopp, Dimmrichtungsumkehr bei einem Dimmvorgang in Richtung dunkel bei Erreichen der Grundhelligkeit, sowie Dunkelstart-Funktion mit Ausführung eines Dimmbefehls von der Grundhelligkeit aus.

Die Steuereinrichtung 6 des Master-Dimmers 2 kann vorteilhaft Schutzfunktionen durchführen, wie elektronische Kurzschlußabschaltung, Spannungsüberwachung oder Temperaturüberwachung. Das Dimmersystem kann ergänzt sein durch Anzeigen von Betriebszuständen oder Störungszuständen.

## Patentansprüche

1. Dimmersystem (1) zur Steuerung von Beleuchtungseinrichtungen, das einen modularen Aufbau hat mit einem Master-Dimmer (2) und mindestens einem Slave-Dimmer (3), wobei
a) sowohl der Master-Dimmer (2), als auch der wenigstens eine Slave-Dimmer (3) ein Leistungsteil (4) mit wenigstens einem Leistungstransistor (4.1, 4.2) enthält,
b) nur der Master-Dimmer (2) eine Steuereinrichtung (6) aufweist, die Ansteuersignale für alle Leistungsteile (4) bildet,
c) Steuerleitungen (11) vorhanden sind zur Übertragung der Ansteuersignale zu Slave-Dimmern (3), und
d) gesteuerte Leistungsausgänge (A) von Leistungsteilen (4) aller Dimmer (2, 3) durch elektrische Parallelschaltung miteinander verbunden sind zur Bildung eines gemeinsamen gesteuerten Ausgangs, an den eine Last (5) anschließbar ist.

2. Dimmer nach Anspruch 1, **dadurch gekennzeichnet, daß** Dimmersystem nach Anspruch 2, **dadurch gekennzeichnet, daß** die Steuereinrichtung (6) dafür eingerichtet ist, die Ansteuersignale auf der Grundlage von vorgegebenen Schaltzuständen, Helligkeitswerten und durch Synchronisation mit Nulldurchgängen der Netzwechselspannung zu bilden.

3. Dimmersystem nach einem der vorstehenden Ansprüche, **dadurch gekennzeichnet, daß** zusätzlich ein Steuermodul (7) vorhanden ist, das dafür eingerichtet ist, alternativ oder in Kombination Steuersignale aus einem Installationsbussystem (9) mit besonderen Datenleitungen oder mit Signalübertragung auf Niederspannungsleitungen, oder Steuersignale durch Tasteneingabe auszuwerten und mittels einer Datenleitung (12) zum Mastermodul (2) zu übertragen.

## Claims

1. Dimmer system (1) for controlling lighting devices, which has a modular design with a master dimmer (2) and at least one slave dimmer (3), in which
a) both the master dimmer (2) and the at least one slave dimmer (3) include a power section (4) with at least one power transistor (4.1, 4.2),
b) only the master dimmer (2) has a control device (6), which forms drive signals for all power sections (4),
c) control lines (11) are present for transmitting drive signals to slave dimmers (3), and
d) controlled power outputs (A) of power sections (4) of all the dimmers (2, 3) are interconnected by being connected electrically in parallel for the purpose of forming a common controlled output to which a load (5) can be connected.

2. Dimmer according to Claim 1, **characterized in that** the control device (6) is set up to form the drive signals on the basis of prescribed circuit states and brightness values and by means of synchronization with zero crossings of the AC supply voltage.

3. Dimmer system according to one of the preceding claims, **characterized in that** also present is a control module (7) which is set up so as, alternatively or in combination, to evaluate control signals from an installation bus system (9) with the aid of special data lines or of signal transmission on low-voltage lines, or to evaluate control signals by means of touch-tone input, and to transmit them to the master module (2) by means of a data line (12).

## Revendications

1. Système gradateur (1) pour commander des dispositif d'éclairage, présentant une construction modulaire avec un gradateur-maître (2) et au moins un gradateur-esclave (3), dans lequel :
a) aussi bien le gradateur-maître (2) qu'un gradateur-esclave (3) au nombre d'un au moins contient une partie de puissance (4) avec au moins un transistor de puissance (4.1, 4.2),
b) seul le gradateur-maître (2) comprend un dispositif de commande (6) qui établit des signaux de commande pour toutes les parties de puissance (4),
c) des conducteurs de commande (11) assurent la transmission des signaux de commande aux gradateurs-esclaves (3), et
d) des sorties de puissance (A) commandées, appartenant aux parties de puissance (4) de tous les gradateurs (2, 3), sont reliées électriquement en parallèle pour former une sortie commandée commune à laquelle peut être raccordée une charge (5).

2. Système gradateur selon la revendication 1, **caractérisé en ce que** le dispositif de commande (6) est conçu pour former des signaux de commande sur la base d'états de commutation et de valeurs de luminosité prédéfinis, et par synchronisation avec les passages à zéro de la tension alternative du réseau.

3. Système gradateur selon la revendication 1 ou 2, **caractérisé en ce que** il y a de plus un module de commande (7) qui est conçu pour transmettre alternativement ou en combinaison des signaux de commande provenant d'un système de bus d'installation (9), avec des conducteurs spécifiques de données ou avec transmission de données sur des conducteurs à basse tension, ou des signaux de commande introduits au clavier et pour les transmettre par un conducteur de données (12) au module-maître (2).
